# FASCICULE DE BREVET EUROPEEN

(11) **EP 2 244 900 B1**
(45) Date de publication et mention de la délivrance du brevet: **02.04.2014**
(21) Numéro de dépôt: 09721001.7
(22) Date de dépôt: 24.02.2009
(51) Int. Cl.: B60K 6/52, B60W 20/00, B60K 6/48

(54) **PROCEDE DE COUPLAGE D'UNE MACHINE ELECTRIQUE DE TRACTION SUR UN VEHICULE HYBRIDE ET VEHICULE HYBRIDE POUR LA MISE EN OEUVRE DU PROCEDE**
VERFAHREN ZUR KOPPLUNG EINER ELEKTRISCHEN TRAKTIONSMASCHINE AN EIN HYBRIDFAHRZEUG UND HYBRIDFAHRZEUG ZUR IMPLEMENTIERUNG DES VERFAHRENS
METHOD FOR COUPLING AN ELECTRIC TRACTION MACHINE TO A HYBRID VEHICLE AND HYBRID VEHICLE FOR IMPLEMENTING SAID METHOD

(30) Priorité: 26.02.2008 FR 0851188
(43) Date de publication de la demande: 03.11.2010
(73) Titulaire: PEUGEOT CITROËN AUTOMOBILES S.A., 78140 Vélizy Villacoublay (FR)
(72) Inventeur: BESNARD, Sébastien, F-92330 Sceaux (FR); ROBART, Nicolas, F-92130 Issy Les Moulineaux (FR)
(86) Numéro de dépôt international: PCT/FR2009/050289
(87) Numéro de publication internationale: WO 2009/112750

(56) Documents cités:
- EP-A- 1 433 641
- JP-A- 2002 160 541
- US-A1- 2004 147 366

## Description

L'invention concerne les véhicules du type comportant une chaîne de traction à groupe motopropulseur (ou GMP) avec un moteur thermique couplé au train avant du véhicule par l'intermédiaire d'une boîte de vitesses et une machine électrique destinée à être couplée au train arrière du véhicule.

L'invention concerne plus particulièrement les véhicules hybrides disposant de deux réservoirs d'énergie distincts. On considère que chacun des réservoirs constitue une source d'énergie transmise aux roues du véhicule pour le faire avancer et que le lien en puissance vers l'un des réservoirs d'énergie est réversible. L'énergie contenue dans le réservoir réversible peut être utilisée pour accélérer le véhicule. L'énergie cinétique du véhicule, lors d'une décélération, peut être à son tour utilisée pour remplir ce réservoir.

Habituellement dans un véhicule hybride, un premier réservoir contient un carburant par exemple de l'essence pour faire fonctionner le moteur thermique du groupe motopropulseur. Le deuxième réservoir réversible est une batterie électrique.

Dans les véhicules hybrides de l'état de l'art, la machine électrique est couplée aux roues du véhicule selon différentes techniques et en application de diverses stratégies de couplage souvent liées à une optimisation des points de fonctionnement des machines électriques et thermiques du véhicule hybride.

Par exemple, dans certaines stratégies de couplage, la machine électrique apporte un couple supplémentaire aux roues du véhicule de façon à optimiser la consommation en carburant du moteur thermique, ou lorsque le couple fournit par le moteur thermique est insuffisant.

Dans d'autres stratégies la machine électrique est couplée aux roues du véhicule pour absorber un excès de couple fourni par le moteur thermique et transformer ce couple excédentaire en énergie électrique alimentant la batterie. La machine électrique peut également être utilisée pour propulser le véhicule lorsque le moteur thermique est arrêté et découplé des roues avant.

On connaît également du document US2004/0147366, un procédé dont les caractéristiques sont conformes au préambule de la revendication 1.

Dans tous ces cas, une machine électrique couplée aux roues du véhicule en mouvement se traduit par une consommation supplémentaire de carburant du fait des pertes de couple occasionnée par l'entraînement en rotation de la machine électrique avec son dispositif de couplage aux roues du véhicule.

Le problème que se propose de résoudre la présente invention est de garantir une balance d'énergie positive en cas de récupération.

A cet effet, l'invention propose un procédé de contrôle de véhicule hybride conforme à la partie caractérisante de la revendication 1.

Dans une réalisation, lorsque le niveau de décélération Dc du véhicule est supérieur au seuil Dcs de décélération prédéterminé, le procédé comporte une phase de configuration de la machine électrique en génératrice suivie d'une phase de couplage de la machine électrique avec l'arbre moteur par le dispositif de couplage pour fournir un courant électrique au moyen de stockage d'énergie électrique.

Dans une autre réalisation, la valeur de la décélération Dc est calculée à partir de la variation de la vitesse Vt du véhicule.

Un autre but de l'invention est de proposer une stratégie de couplage des machines électriques aux roues d'un véhicule hybride de façon à minimiser les pertes provoquées par l'entraînement de ses machines par le moteur thermique du véhicule.

L'invention sera mieux comprise par une description du procédé selon l'invention et un exemple d'architecture de véhicule hybride pour la mise en oeuvre du procédé en référence aux figures indexées dans lesquelles :
- la figure 1 montre un véhicule hybride pour la mise en oeuvre du procédé selon l'invention et ;
- la figure 2, représente un organigramme montrant les principales étapes du procédé selon l'invention.

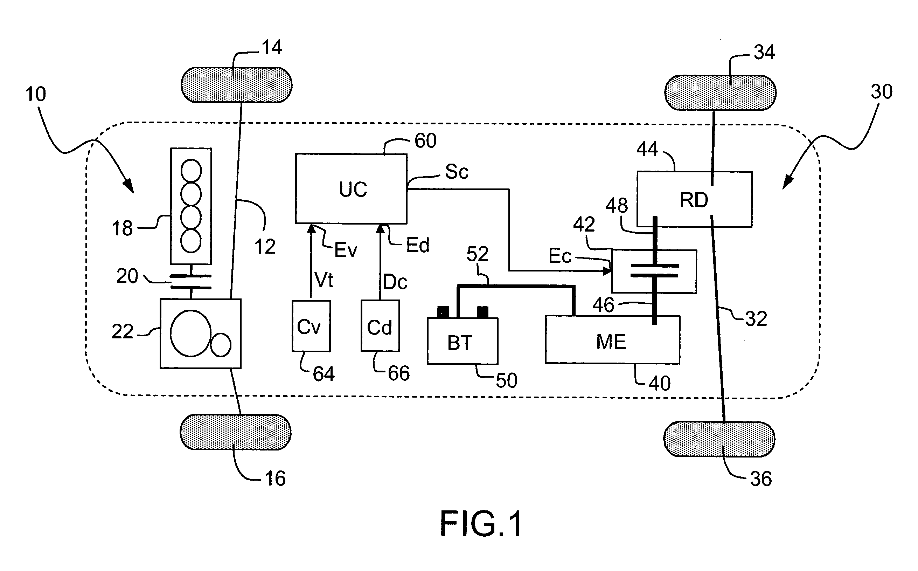

La figure 1 montre un véhicule hybride pour la mise en oeuvre du procédé selon l'invention.

Le véhicule de la figure 1 comporte, à l'avant du véhicule, une chaîne de traction thermique 10 ayant un train avant 12 et deux roues avant 14, 16.

Les roues avant sont entraînées en rotation par le couple fourni par un moteur thermique 18 par l'intermédiaire d'un embrayage 20 et d'une boîte de vitesses 22. L'arrière du véhicule comporte une chaîne de traction électrique 30 ayant un train arrière 32 et deux roues arrière 34, 36.

Le véhicule de la figure 1 comporte, en outre, une machine électrique ME 40, dimensionnée pour pouvoir propulser le véhicule, destinée à être couplé au train arrière 32 du véhicule par l'intermédiaire d'un dispositif de couplage 42 et un réducteur 44.

La machine électrique ME comporte un arbre de rotor 46 destiné à être couplé mécaniquement à un arbre moteur 48 du réducteur. Le réducteur 44 permet d'adapter la vitesse de rotation de l'arbre de rotor 46 de la machine électrique 40 à une vitesse de rotation plus faible du train arrière 32 du véhicule.

Le dispositif de couplage 42, inséré entre l'arbre de rotor 46 de la machine électrique et l'arbre moteur 48 du réducteur 44, comporte une entrée de commande Ec pour être mis, soit dans une position dite de couplage assurant la transmission d'un couple entre l'arbre de rotor 46 de la machine électrique et l'arbre moteur 48 du réducteur 44, soit dans une positon de découplage interrompant la transmission d'un couple entre deux arbres 46, 48.

La machine électrique 40 peut être, soit configurée en moteur électrique, par exemple lorsque véhicule hybride est dans une configuration de propulsion purement électrique, soit configurée en génératrice électrique, par exemple lors d'une récupération d'énergie cinétique du véhicule. A cet effet, le véhicule comporte un moyen de stockage 50 d'énergie électrique couplé à la machine électrique par un réseau électrique 52 du véhicule.

Le moyen de stockage électrique 50 est typiquement une batterie BT 50, ou un pack de batteries constitué d'une pluralité d'accumulateurs.

En configuration de propulsion électrique, la batterie BT fournit un courant d'alimentation par le réseau électrique 52 à la machine électrique ME. En configuration de récupération d'énergie cinétique du véhicule, la machine électrique charge la batterie par ledit réseau électrique.

Le véhicule hybride selon l'invention comporte des éléments habituels de commande d'accélération et de freinage (non représentés sur la figure) contrôlés par le conducteur, tels qu'une pédale d'accélération commandant le couple délivré par le groupe motopropulseur (ou GMP) et une pédale de frein commandant le freinage du véhicule.

L'architecture du véhicule hybride représenté à la figure 1, selon l'invention, comporte en outre un moyen de commande, par exemple une unité centrale UC 60 assurant le pilotage de la chaîne de traction thermique 10, de la chaîne de traction électrique 30 et du dispositif de couplage 42 pour répondre aux différentes stratégies de pilotage du véhicule selon les principales caractéristiques de l'invention.

A cet effet, l'unité centrale UC 60 comporte une sortie Sc connectée à l'entrée Ec de commande du dispositif de couplage et deux entrées Ev, Ed recevant respectivement, l'une Ev, une information de vitesse du véhicule Vt en sortie d'un capteur de vitesse Cv 64 et, l'autre Ed, une information de décélération du véhicule Dc en sortie d'un capteur de décélération 66 du véhicule.

La vitesse Vt et la décélération Dc sont des paramètres caractéristiques du déplacement du véhicule dont la valeur résulte bien du déplacement de la caisse ou de l'habitacle du véhicule.

Dans une réalisation plus économique le véhicule comporte un seul capteur de vitesse Vt, la valeur de la décélération Dc peut être calculée à partir de la variation de la vitesse du véhicule.

Par la suite est décrit le procédé de contrôle du véhicule hybride selon l'invention qui est essentiellement un procédé de couplage de la machine électrique 40 sur le train arrière 32 du véhicule

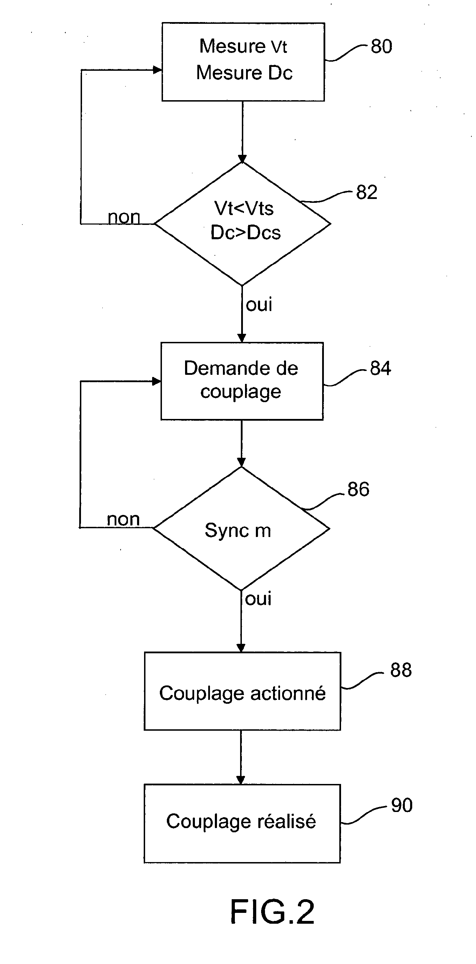

La figure 2, représente un organigramme montrant les principales étapes du procédé selon l'invention.

Un seuil de vitesse Vts et un seuil Dcs de décélération du véhicule sont préétablis.

Par hypothèse, dans une condition initiale de déplacement du véhicule, les seuils de vitesse Vts et de décélération Dts ne sont pas dépassés et l'unité centrale UC 60 met le dispositif de couplage 40 dans l'état de découplage, l'arbre de rotor 46 de machine électrique 40 est découplé de l'arbre moteur du réducteur 44 et, par conséquent, du train arrière 30 du véhicule.
Première étape 80 :
   - mesure continue des paramètres de vitesse Vt et de décélération Dc du véhicule ;
Deuxième étape 82 :
   - comparaison 82 de la vitesse du véhicule Vt au seuil prédéterminé de vitesse Vts et la décélération du véhicule Dt au seuil prédéterminé de décélération Dts. Si la vitesse Vt du véhicule est inférieur au seuil Vts ou ,selon l'invention, si la décélération Dc du véhicule est supérieure au seuil Dts (oui), l'unité centrale UC fournit une demande de couplage 84 au dispositif de couplage 40, si les seuils prédéterminés ne sont pas dépassés (non) le dispositif de couplage 42 est maintenu dans l'état initial de découplage ;
Troisième étape : Si l'unité centrale UC fournit une demande de couplage (oui) :
   - synchronisation de la machine électrique (sync m). La demande de couplage entraîne, avant que le couplage soit effectif, une phase de vérification de la synchronisation 86 de l'arbre de rotor 46 de machine électrique avec l'arbre moteur 48 du réducteur. Si la synchronisation est effective (oui) le couplage entre l'arbre de rotor et l'arbre moteur du réducteur est démandé (88) par le dispositif de couplage, si non le dispositif de couplage est en attente de synchronisation (non) ;
Quatrième étape :
   - la synchronisation est effective (oui), le dispositif de couplage est actionné (88) ;
Cinquième étape :
   - le couplage est réalisé 90, l'arbre de rotor 46 de la machine électrique est couplé mécaniquement à l'arbre moteur 48 du réducteur.

Le procédé de couplage de la machine électrique aux roues du véhicule comporte l'avantage de supprimer des pertes dues à entraînement de la machine électrique par le moteur thermique lorsque celle-ci n'est pas utile. C'est par exemple le cas lorsque le véhicule roule à sa vitesse nominale, le moteur thermique fonctionnant alors avec un bon rendement énergétique. Dans ce cas, lorsque la machine est mécaniquement découplée des roues et se trouve à l'arrêt (régime nul) et qu'il est souhaité ou nécessaire de la coupler au roues du véhicule, l'énergie nécessaire à la synchronisation de la machine électrique lors du couplage avec un arbre couplé aux roues du véhicule peut être récupérée pendant une phase de décélération ne durant qu'une seule seconde.

Par ailleurs, lors d'une décélération du véhicule, si une machine électrique se trouve mécaniquement découplée des roues du véhicule, le délai nécessaire pour synchroniser cette machine avec un arbre couplé aux roues n'est pas contraignant car la présence de la machine électrique n'est pas nécessaire pour répondre à la demande de décélération effectuée par le conducteur (relâchement de la pédale d'accélération ou appui sur la pédale de frein par exemple). Ce délai a été évalué à moins d'une seconde.

Le procédé selon l'invention permet donc de décider à quels instants on souhaite coupler la machine électrique aux roues arrière du véhicule en fonction des critères décrits ci-dessus.

Ainsi, à titre d'exemple non limitatif permettant d'illustrer une prise de décision, lorsque le véhicule roule à faible allure (en dessous de 80 Km/h par exemple), il est préférable de coupler la machine pour assurer un roulage électrique pur ou fournir un surplus de couple éventuel.

Au-delà de cette vitesse, la machine électrique est généralement moins utile car il n'y a plus de roulage en électrique pur et le moteur est mieux positionné pour assurer des transitoires performants.

Par ailleurs, lorsque l'on détecte une décélération du véhicule, quelle que soit la vitesse du véhicule, il est préférable de coupler la machine électrique pour pouvoir assurer la récupération d'énergie électrique.

Le seuil de décélération, au-delà duquel on choisit de coupler la machine électrique est défini de telle manière que l'énergie qui sera récupérée en une seconde de décélération est supérieur ou égale à l'énergie qu'il faut dépenser pour synchroniser la machine.

## Revendications

1. Procédé de contrôle de véhicule hybride comportant une chaîne de traction à groupe motopropulseur (10) ayant un moteur thermique (18) couplé aux roues (14, 16) du véhicule par l'intermédiaire d'une boîte de vitesses (22), une machine électrique ME (40) pouvant être configurée, soit en moteur électrique pour fournir un couple de traction au véhicule, soit en génératrice pour fournir un courant électrique à un moyen de stockage (50) d'énergie électrique par un réseau électrique (52) du véhicule, un dispositif de couplage (42) interposé entre la machine électrique et un arbre moteur (48) couplé aux roues du véhicule (34, 36) comportant une entrée de commande Ec pour être mis soit dans une position dite de couplage assurant un couplage entre la machine électrique (40) et l'arbre moteur (48), le couplage entre la machine électrique (40) et l'arbre moteur (48), consistant d'abord à synchroniser (86) la machine électrique avec l'arbre moteur puis à les coupler (88), soit dans une position de découplage interrompant le couplage entre ladite machine électrique et l'arbre moteur, au moins un capteur (64, 66) fournissant la valeur d'un paramètre (Vt, Dc) caractéristique du déplacement du véhicule, un dispositif de contrôle (60) du véhicule, le dispositif de couplage (42) étant commandé par le dispositif de contrôle (60) pour coupler la machine électrique (40) à l'arbre moteur (48) lorsque la valeur du paramètre caractéristique du déplacement du véhicule franchit un seuil (Vts, Dcs) prédéterminé, le paramètre étant la décélération Dc du véhicule, le dispositif de couplage (42) étant commandé pour coupler la machine électrique à l'arbre moteur lorsque la décélération Dc du véhicule est supérieure à un seuil de décélération Dcs prédéterminé **caractérisé en ce que** ledit seuil est déterminé de telle manière que l'énergie qui sera récupérée pendant une durée déterminée de décélération, est supérieure ou égale à l'énergie qu'il faut dépenser pour synchroniser la machine.

2. Procédé de contrôle de véhicule hybride selon la revendication 1, **caractérisé en ce que** lorsque le niveau de décélération Dc du véhicule est supérieur au seuil Dcs de décélération prédéterminé, le procédé comporte une phase de configuration de la machine électrique (40) en génératrice suivie d'une phase de couplage de la machine électrique avec l'arbre moteur (48) par le dispositif de couplage (42) pour fournir un courant électrique au moyen de stockage (50) d'énergie électrique.

3. Procédé de contrôle de véhicule hybride selon la revendication 2, **caractérisé en ce que** la valeur de la décélération Dc est calculée à partir de la variation de la vitesse Vt du véhicule.

## Patentansprüche

1. Verfahren zum Steuern eines Hybridfahrzeugs, das eine Zugkette mit Antriebsaggregat (10) aufweist, das einen Verbrennungsmotor (18) hat, der mit Rädern (14, 16) des Fahrzeugs über ein Schaltgetriebe (22) gekuppelt ist, eine elektrische Maschine ME (40), die entweder als Elektromotor konfiguriert sein kann, um dem Fahrzeug ein Zugmoment zu liefern, oder als Stromgenerator, um einen elektrischen Strom zu einem Speichermittel (50) elektrischer Energie durch ein elektrisches Netz (52) des Fahrzeugs zu liefern, eine Kupplungsvorrichtung (42), die zwischen die elektrische Maschine und eine Antriebswelle (48), die mit den Rädern des Fahrzeugs (34, 36) gekuppelt ist, eingefügt ist, die einen Steuereingang Ec aufweist, um entweder in eine so genannte Kupplungsposition versetzt zu werden, die ein Kuppeln zwischen der elektrischen Maschine (40) und der Antriebswelle (48) sicherstellt, wobei das Kuppeln zwischen der elektrischen Maschine (40) und der Antriebswelle (48) zuerst darin besteht, die elektrische Maschine mit der Antriebswelle zu synchronisieren (86) und beide dann zu kuppeln, oder in einer abkuppelten Position, die die Kupplung zwischen der elektrischen Maschine und der Antriebswelle unterbricht, wobei mindestens ein Sensor (64, 66) den Wert eines Parameters (Vt, D) liefert, der für die Bewegung des Fahrzeugs charakteristisch ist, eine Steuervorrichtung (60) des Fahrzeugs, wobei die Kupplungsvorrichtung (42) von der Steuervorrichtung (60) gesteuert wird, um die elektrische Maschine (40) mit der Antriebswelle (48) zu kuppeln, wenn der Wert des charakteristischen Parameters der Bewegung des Fahrzeugs einen vorbestimmten Schwellenwert (Vts, Dcs) überschreitet, wobei der Parameter die Verlangsamung Dc des Fahrzeugs ist, wobei die Kupplungsvorrichtung (42) gesteuert wird, um die elektrische Maschine mit der Antriebswelle zu kuppeln, wenn die Verlangsamung Dc des Fahrzeugs größer ist als ein vorbestimmter Verlangsamungsschwellenwert Dcs, **dadurch gekennzeichnet, dass** der Schwellenwert derart festgelegt ist, dass die Energie, die während einer bestimmten Verlangsamungszeit zurückgewonnen wird, größer oder gleich ist wie die Energie, die verbraucht werden muss, um die Maschine zu synchronisieren.

2. Verfahren zum Steuern eines Hybridfahrzeugs nach Anspruch 1, **dadurch gekennzeichnet, dass**, wenn das Verlangsamungsniveau Dc des Fahrzeugs größer ist als der vorbestimmte Verlangsamungsschwellenwert Dcs, das Verfahren eine Konfigurationsphase der elektrischen Maschine (40) als Stromgenerator gefolgt von einer Kupplungsphase der elektrischen Maschine mit der Antriebswelle (48) durch die Kupplungsvorrichtung (42) aufweist, um einen elektrischen Strom zu dem Speichermittel (50) elektrischer Energie zu liefern.

3. Steuerverfahren eines Hybridfahrzeugs nach Anspruch 2, **dadurch gekennzeichnet, dass** der Verlangsamungswert Dc ausgehend von der Variation der Geschwindigkeit Vt des Fahrzeugs berechnet wird.

## Claims

1. A method of controlling a hybrid vehicle including a drive unit with power train (10) having a heat engine (18) coupled to the wheels (14, 16) of the vehicle through a gearbox (22), an electric machine ME (40) being able to be configured either as an electric motor to provide a traction torque to the vehicle, or as a generator to supply an electric current to a storage means (50) of electrical energy via an electrical network (52) of the vehicle, a coupling device (42) interposed between the electric machine and a drive shaft (48) coupled to the wheels of the vehicle (34, 36) including a control input Ec to be placed either in a position designated a coupling position ensuring a coupling between the electric machine (40) and the drive shaft (48), the coupling between the electric machine (40) and the drive shaft (48) consisting firstly in synchronising (86) the electric machine with the drive shaft then coupling them (88), or in a decoupling position interrupting the coupling between the said electric machine and the drive shaft, at least one sensor (64, 66) providing the value of a parameter (Vt, Dc) characteristic of the displacement of the vehicle, a control device (60) of the vehicle, the coupling device (42) being commanded by the control device (60) to couple the electric machine (40) to the drive shaft (48) when the value of the characteristic parameter of the displacement of the vehicle passes over a predetermined threshold (Vts, Dcs), the parameter being the deceleration Dc of the vehicle, the coupling device (42) being commanded to couple the electric machine to the drive shaft when the deceleration Dc of the vehicle is greater than a predetermined deceleration threshold Dcs, **characterized in that** the said threshold is determined such that the energy which will be recovered during a predetermined deceleration duration is greater than or equal to the energy which must be expended to synchronise the machine.

2. The method of controlling a hybrid vehicle according to Claim 1, **characterized in that** when the deceleration level Dc of the vehicle is greater than the predetermined deceleration threshold Dcs, the method includes a configuration phase of the electric machine (40) into a generator followed by a coupling phase of the electric machine with the drive shaft (48) by the coupling device (42) to provide an electric current to the storage means (50) of electrical energy.

3. The method of controlling a hybrid vehicle according to Claim 2, **characterized in that** the value of the deceleration Dc is calculated from the variation of the speed Vt of the vehicle.
